# EUROPEAN PATENT APPLICATION

(11) **EP 4 333 548 A1**
(43) Date of publication of application: **06.03.2024**
(21) Application number: 23193825.9
(22) Date of filing: 29.08.2023
(51) Int. Cl.: H04W 76/15, H04W 48/12, H04W 48/16, H04W 84/12

(54) **PRIMARY LINK IDENTIFICATION SCHEMES IN WIRELESS COMMUNICATIONS**

(30) Priority: 29.08.2022 US 202263373738 P; 28.08.2023 US 202318238777
(71) Applicant: MediaTek Inc., 30078 Hsinchu City (TW)
(72) Inventor: LU, Kai Ying, San Jose, 95134 (US); YEE, James Chih-Shi, San Jose, 95134 (US)
(74) Representative: Hoefer & Partner Patentanwälte mbB

(57) **Abstract**

Various techniques and schemes pertaining to primary link identification schemes in wireless communications are described. An access point (AP) multi-link device (MLD) establishes a plurality of links, the plurality of links comprising a primary link and a non-primary link that constitute a non-simultaneous-transmission-and-reception (NSTR) link pair. An AP affiliated with the AP transmits a beacon frame with an indication on whether or not the AP or a reported AP is affiliated with an NSTR AP MLD and is operating on the primary link of the NSTR link pair.

## Description

### CROSS REFERENCE TO RELATED PATENT APPLICATION(S)

The present disclosure is part of a non-provisional patent application claiming the priority benefit of U.S. Provisional Patent Application No. 63/373,738, filed 29 August 2022, respectively, the content of which herein being incorporated by reference in its entirety.

### TECHNICAL FIELD

The present disclosure is generally related to wireless communications and, more particularly, to primary link identification schemes in wireless communications.

### BACKGROUND

Unless otherwise indicated herein, approaches described in this section are not prior art to the claims listed below and are not admitted as prior art by inclusion in this section.

In wireless communications under the Institute of Electrical and Electronics Engineers (IEEE) 802.11 standards, a multi-link device (MLD) that supports multi-link operation but has an in-device coexistence (IDC) interference when the two links are close to each other. Thus, the MLD operating on two links with IDC interference cannot support simultaneous transmission and reception at a time on both of the links. In such cases, the two links are referred to as a non-simultaneous-transmission-and-reception (NSTR) link pair and the MLD is referred to as an NSTR MLD. When an access point (AP) MLD operates on an NSTR pair of links, synchronous transmission between an NSTR AP MLD and a simultaneous-transmission-and-reception (STR)/NSTR non-AP MLD can be applied to avoid IDC interference by performing contention-based channel access on the NSTR pair of links, respectively, and starting transmission at the same time with certain constraints. One constraint is that a primary link is designated for the NSTR link pair. Another constraint is that the other link is the non-primary link of the NSTR link pair. A further constraint is that the non-primary link may initiate a physical-layer protocol data unit (PPDU) transmission only if a station (STA) affiliated with the same MLD on the primary link is also initiating the PPDU as a transmission opportunity (TXOP) holder with the same start time. However, a non-AP MLD intending to associate with an NSTR AP MLD needs to identify the primary link and non-primary link of the NSTR link pair so that it can meet the association and transmission requirements. How the non-AP MLD identifies the NSTR AP MLD and the primary link before association, especially when there are more than two links set up by the NSTR AP MLD, has yet to be defined at the present time. Therefore, there is a need for a solution of NSTR AP MLD and primary link identification schemes in wireless communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter. Methods and an apparatus according to the invention are defined in the independent claims. The dependent claims define preferred embodiments thereof.

An objective of the present disclosure is to provide schemes, concepts, designs, techniques, methods and apparatuses pertaining to primary link identification schemes in wireless communications. Under various proposed schemes in accordance with the present disclosure, it is believed that aforementioned issue may be addressed or otherwise alleviated.

In one aspect, a method may involve an AP MLD establishing a plurality of links, the plurality of links comprising a primary link and a non-primary link that constitute an NSTR link pair. The method may also involve an AP affiliated with the AP MLD transmitting a beacon frame with an indication on whether or not the AP or a reported AP is affiliated with an NSTR AP MLD and is operating on the primary link of the NSTR link pair.

In another aspect, a method may involve a non-AP STA affiliated with a non-AP MLD receiving a beacon frame from an AP affiliated with an AP MLD on at least one link of a plurality of links, the plurality of links comprising a primary link and a non-primary link that constitute an NSTR link pair. The method may also involve the non-AP STA identifying one AP that is affiliated with an NSTR AP MLD and is operating on the primary link of the NSTR link pair based on an indication in the beacon frame.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, WiMax, Bluetooth, ZigBee, 5th Generation (5G)/New Radio (NR), Long-Term Evolution (LTE), LTE-Advanced, LTE-Advanced Pro, Internet-of-Things (IoT), Industrial IoT (IIoT) and narrowband IoT (NB-loT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example design under a proposed scheme in accordance with the present disclosure.
FIG. 3 is a diagram of an example design under a proposed scheme in accordance with the present disclosure.
FIG. 4 is a block diagram of an example communication system under a proposed scheme in accordance with the present disclosure.
FIG. 5 is a flowchart of an example process under a proposed scheme in accordance with the present disclosure.
FIG. 6 is a flowchart of an example process under a proposed scheme in accordance with the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to primary link identification schemes in wireless communications. According to the present disclosure, a number of possible solutions may be implemented separately or jointly. That is, although these possible solutions may be described below separately, two or more of these possible solutions may be implemented in one combination or another.

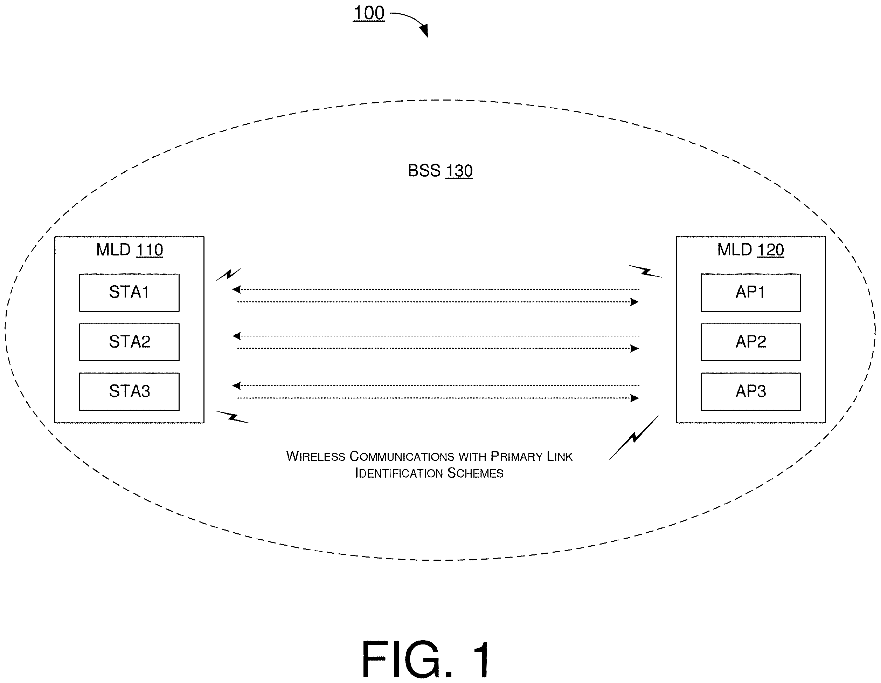

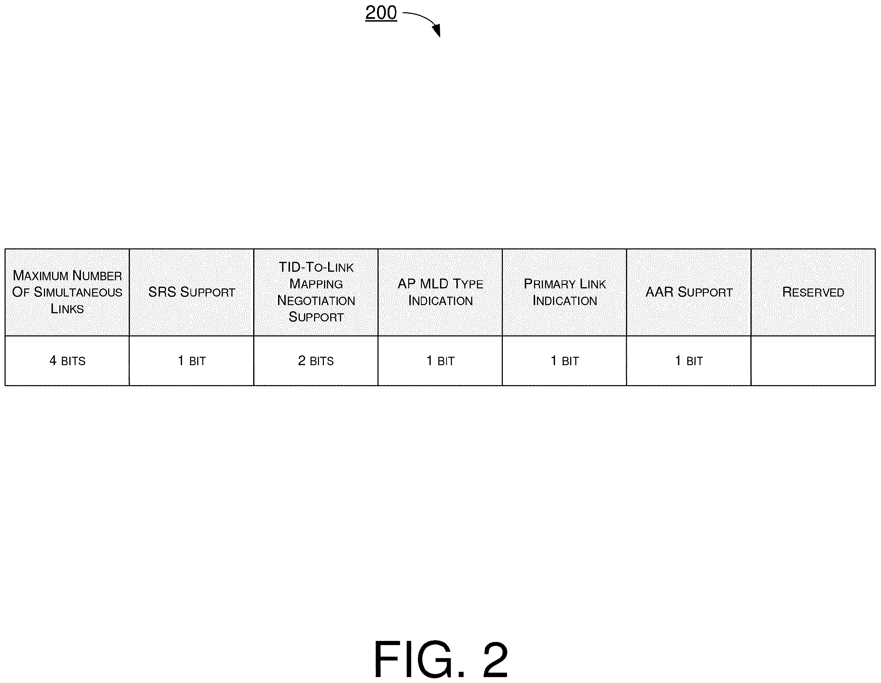

FIG. 1 illustrates an example network environment 100 in which various solutions and schemes in accordance with the present disclosure may be implemented. FIG. 2 ~ FIG. 6 illustrate examples of implementation of various proposed schemes in network environment 100 in accordance with the present disclosure. The following description of various proposed schemes is provided with reference to FIG. 1 ~ FIG. 6.

Referring to FIG. 1, network environment 100 may involve at least an MLD 110 and an MLD 120 communicating wirelessly with each other in a basic service set (BSS) 130 in accordance with one or more IEEE 802.11 standards (e.g., IEEE 802.11 be and beyond). Each STA of multiple STAs affiliated with MLD 110 may function as a non-AP STA, and each STA of multiple STAs affiliated with MLD 120 may function as an AP STA. That is, in the example shown in FIG. 1, MLD 110 may be an NSTR non-AP MLD and MLD 120 may be an NSTR AP MLD operating on an NSTR link pair (although each of MLD 110 and MLD 120 may be an AP MLD or a non-AP MLD in various implementations). For simplicity and illustrative purposes without limiting the scope of the present disclosure, in FIG. 1, MLD 110 is shown to have three STAs ("STA1", "STA2" and "STA3" affiliated therewith) and MLD 120 is shown to have three APs ("AP1", "AP2" and "AP3" affiliated therewith), although in actual implementations the number of affiliated STAs/APs may be the same different (e.g., two instead of three). Moreover, each of MLD 110 and MLD 120 may be configured to utilize primary link identification schemes in wireless communications in accordance with various proposed schemes, as described below. It is noteworthy that, while the various proposed schemes may be individually or separately described below, in actual implementations each of the proposed schemes may be utilized individually or separately. Alternatively, some or all of the proposed schemes may be utilized jointly.

FIG. 2 illustrates an example design 200 under a proposed scheme in accordance with the present disclosure. Under the proposed scheme with respect to primary link indication, an AP affiliated with an AP MLD (e.g., MLD 120) may indicate whether or not it is affiliated with an NSTR AP MLD and is operating on a primary link of an NSTR link pair by at least one of the AP MLD Type indication and the primary link indication in the Common Information (Info) field of a Multi-Link (ML) element transmitted by the AP. FIG. 2 shows MLD Capabilities and Operations subfield format of the ML element under the proposed scheme. Referring to FIG. 2, in case that the AP is operating on the primary link of the NSTR link pair, the AP may, in the Common Info field of the ML element transmitted by the AP (e.g., in Beacon frame(s)), indicate at least one of that: (1) the AP is affiliated with an NSTR AP MLD by setting a value of the AP MLD Type Indication subfield to 1 and (2) the AP is operating on a primary link by setting a value of the Primary Link Indication subfield to 1. Moreover, the Primary Link Indication subfield may be optionally present, in an event that the AP MLD Type Indication subfield is set to 1. On the other hand, in case that the AP is not operating on the primary link of the NSTR link pair, the AP may, in the Common Info field of the ML element transmitted by the AP, indicate that: (1) the AP is affiliated with an NSTR AP MLD by setting the value of the AP MLD Type Indication subfield to 1 and (2) the AP is not operating on the primary link by setting a value of the Primary Link Indication subfield to 0.

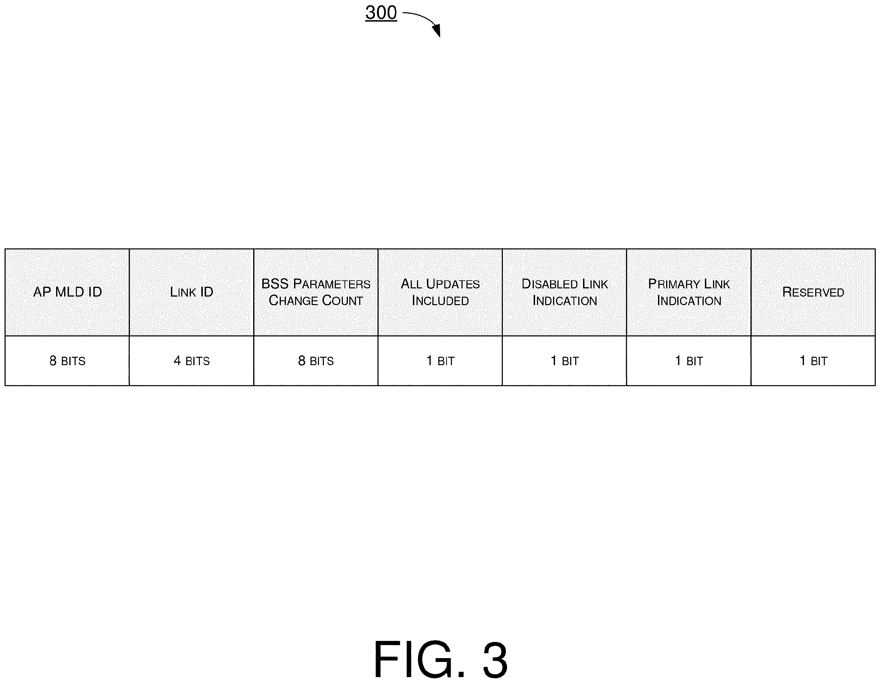

FIG. 3 illustrates an example design 300 in accordance with the present disclosure. Under the proposed scheme with respect to primary link indication, an AP (reporting AP) affiliated with an NSTR AP MLD (e.g., MLD 120) may indicate whether or not a reported AP affiliated with the same NSTR AP MLD is operating on a primary link of an NSTR link pair by the Primary Link Indication in the MLD Parameters subfield in a Target Beacon Transmission Time (TBTT) Information field of a Neighbor AP Information field in a Reduced Neighbor Report (RNR) element transmitted by the reporting AP (e.g., in Beacon frame(s)). FIG. 3 shows MLD Parameters subfield format of the ML element under the proposed scheme. Referring to FIG. 3, in case that the reported AP is operating on the primary link of an NSTR link pair, the reporting AP may indicate that the reported AP is operating on a primary link by setting a value of the Primary Link Indication to 1 in the MLD Parameters subfield in the TBTT Information field of the RNR element transmitted by the reporting AP. On the other hand, in case that the reported is not operating on a link of the NSTR link pair, the reporting AP may set the value of the Primary Link Indication to 0 in the MLD Parameters subfield in the TBTT Information field of the RNR element transmitted by the reporting AP. Under the proposed scheme, the AP MLD Type Indication subfield in the Common Info field of the ML element transmitted by the reporting AP may be set to 1. Moreover, the Primary Link Indication subfield may be optionally present, in an event that the AP MLD Type Indication subfield is set to 1.

Under a proposed scheme in accordance with the present disclosure with respect to non-AP MLD behavior, a non-AP MLD (e.g., MLD 110) may identify an NSTR AP MLD and a primary link of an NSTR link pair by at least one of the AP MLD Type Indication subfield and the Primary Link Indication subfield in the Common Info field of the ML element received from an AP affiliated with an NSTR AP MLD. Under the proposed scheme, in case that a non-AP STA affiliated with the non-AP MLD decodes the AP MLD Type Indication as being equal to 1 in the Common Info field of the ML element received from one other AP, the non-AP STA may determine that: (1) the other AP is affiliated with an NSTR AP MLD and (2) the primary link indication is carried in the Common Info field of the ML element received from the other AP. For instance, in case that the received Primary Link Indication subfield is equal to 1, the non-AP MLD may determine that the other AP is operating on a primary link of an NSTR link pair. Conversely, in case that the received Primary Link Indication subfield is equal to 0, the non-AP MLD may determine that the other AP is affiliated with an NSTR AP MLD but is not operating on a link or a primary link of an NSTR link pair. Under the proposed scheme, the NSTR link pair corresponding to the identified primary link may be determined by any one of the following factors/conditions: (1) the non-primary link identified in the TBTT Information field of the Neighbor AP Information field corresponding to a reported AP in case that there is only one AP affiliated with the NSTR AP MLD that is operating on a non-primary link of an NSTR link pair; (2) the NSTR Indication Bitmap in the Per-STA Profile subelement corresponding to the primary link in the ML element received from an AP affiliated with the NSTR AP MLD; and (3) the NSTR Indication Bitmap in the Per-STA Profile subelement corresponding to the non-primary link in the ML element received from an AP affiliated with the NSTR AP MLD.

Under another proposed scheme in accordance with the present disclosure with respect to non-AP MLD behavior, a non-AP MLD (e.g., MLD 110) may identify a primary link of an NSTR link pair by the Primary Link Indication in the MLD Parameters subfield in the TBTT Information field of the Neighbor AP Information field in the RNR element received from an AP affiliated with an NSTR AP MLD. Under the proposed scheme, in case that a non-AP STA affiliated with the non-AP MLD decodes the Primary Link Indication in the MLD Parameters subfield in the TBTT Information field corresponding to a reported AP in the RNR element received from a reporting AP as being equal to 1, the non-AP STA may determine that the reported AP is operating on a primary link. Conversely, in case that the Primary Link Indication subfield is equal to 0, the non-AP STA may determine that the reported AP is not operating on a link or a primary link of an NSTR link pair. Under the proposed scheme, the Primary Link Indication in the MLD Parameters subfield in the TBTT Information field corresponding to a reported AP affiliated with the same AP MLD as the NSTR AP MLD may be optionally present only in case that the AP MLD Type subfield in the Common Info field of the ML element received from the NSTR AP MLD is equal to 1. In some implementations, the Primary Link Indication in the MLD Parameters subfield in the TBTT Information field may be mandatorily present. Under the proposed scheme, the NSTR link pair corresponding to the identified primary link may be determined by any one of the following factors/conditions: (1) the non-primary link identified in the TBTT Information field of the Neighbor AP Information field corresponding to a reported AP in case that there is only one AP affiliated with the NSTR AP MLD that is operating on a non-primary link of an NSTR link pair; (2) the NSTR Indication Bitmap in the Per-STA Profile subelement corresponding to the primary link in the ML element received from an AP affiliated with the NSTR AP MLD; and (3) the NSTR Indication Bitmap in the Per-STA Profile subelement corresponding to the non-primary link in the ML element received from an AP affiliated with the NSTR AP MLD.

Under still another proposed scheme in accordance with the present disclosure with respect to non-AP MLD behavior, a non-AP MLD (e.g., MLD 110) may identify a primary link of an NSTR link pair by the NSTR Indication Bitmap in the Per-STA Profile subelement corresponding to a non-primary link in the ML element received from an AP affiliated with the NSTR AP MLD. Under the proposed scheme, in case that non-AP MLD identifies the non-primary link of an NSTR link pair through the RNR element received from a reporting AP, the non-AP MLD may determine that the primary link of the NSTR link pair by requesting and decoding the NSTR Indication Bitmap in the Per-STA Profile subelement corresponding to the non-primary link in the ML element received from an AP affiliated with the NSTR AP MLD. A value of the bit in the NSTR Indication Bitmap in the Per-STA Profile subelement corresponding to the non-primary link equal to 1 may indicate the link identification (ID) of the primary link. Moreover, the non-AP MLD may transmit a Multi-Link probe request to any AP affiliated with the NSTR AP MLD that is not operating on the non-primary link so as to obtain the NSTR Indication Bitmap in the Per-STA Profile subelement corresponding to the non-primary link.

In view of the various proposed schemes described above, to aid better understanding and appreciation of benefits provided by the proposed schemes, a number of example scenarios are described below.

In a first example scenario, an NSTR AP MLD (e.g., MLD 120) may establish or otherwise set up an NSTR link pair (e.g., a primary link on a 5GHz band and a non-primary link on a 6GHz band). The NSTR AP MLD may transmit one or more Beacon frames on the primary link, with the AP MLD Type Indication in a Common Info field of an ML element carried in each of the one or more Beacon frames. The NSTR AP MLD may also include the Primary Link Indication subfield in the Common Info field. The NSTR AP MLD may also include an RNR element in each of the one or more Beacon frames to advertise, in the Neighbor AP Information field, that a neighbor AP (e.g., AP1 or AP2) affiliated with the same MLD is operating on the non-primary link.

Correspondingly, a non-AP MLD (e.g., MLD 110) may identify the NSTR AP MLD and the primary link by decoding at least one of the AP MLD Type subfield and the Primary Link Indication subfield in the Common Info field of the ML element in one or more of the Beacon frames received from the AP affiliate with the NSTR AP MLD. Additionally, the non-AP MLD may identify the non-primary link that an AP affiliated with the NSTR AP MLD is operating on by decoding the Neighbor AP Information field in the RNR element received from the NSTR AP MLD. Moreover, the non-AP MLD may determine that the identified primary link and non-primary link constitute an NSTR link pair because the NSTR AP MLD indicates that it has two simultaneous links by a Maximum Number Of Simultaneous Links subfield in each of the one or more Beacon frames. Alternatively, or additionally, the non-AP MLD may determine that the identified primary link and non-primary link constitute an NSTR link pair through the NSTR Indication Bitmap by requesting (e.g., sending an ML probe request) for a Per-STA Profile subelement corresponding to the non-primary link from the AP (which responds with an ML probe response) on the primary link.

In a second example scenario, an NSTR AP MLD (e.g., MLD 120) may establish or otherwise set up three links including an NSTR link pair and another link. For instance, a first link or link1 (L1) may be on a 2.4GHz band, a second link or link2 (L2), as a primary link, may be on a 5GHz band, and a third link or links (L3), as a non-primary link, may be on a 6GHz band. The NSTR AP MLD may transmit one or more Beacon frames on L1 and L2, with the AP MLD Type Indication subfield and Primary Link Indication subfield (optionally) in the Common Info field of the ML element carried in each of the one or more Beacon frames. The value of the Primary Link Indication subfields carried on L1 may be set to 0, while the value of the Primary Link Indication subfields carried on L2 may be set to 1. Additionally, the NSTR AP MLD may include an RNR element in each of the one or more Beacon frames on L1 to advertise AP2 on L2, which is a primary link, and AP3 on L3, which is a non-primary Link. Moreover, the NSTR AP MLD may also include the RNR element in each of the one or more Beacon frames on L2 to advertise AP1 on L1, which is not a link of an NSTR link pair, and AP3 on L3, which is a non-primary link.

Correspondingly, in case that a non-AP STA affiliated with a non-AP MLD (e.g., MLD 110) receives a Beacon frame on L1, the non-AP STA may: (1) identify the NSTR AP MLD by the AP MLD Type Indication subfield in the Common Info field of the ML element, and (2) identify the primary link L2 and the non-primary link L3 by the RNR element. In case that the non-AP STA affiliated with the non-AP MLD receives a Beacon frame on L2, the non-AP STA may: (1) identify the NSTR AP MLD, (2) identify the primary link L2 by the AP MLD Type Indication subfield in the Common Info field of the ML element, and (3) identify the non-primary link L3 by the RNR element. Additionally, the non-AP MLD may determine that the identified primary link and non-primary link are an NSTR link pair because the NSTR AP MLD indicates that it has three simultaneous links by the Maximum Number Of Simultaneous Links subfield in each of the one or more Beacon frame, which implies an NSTR link pair. Alternatively, or additionally, the non-AP MLD may also determine that the identified primary link and non-primary link are an NSTR link pair through the NSTR Indication Bitmap by requesting (e.g., sending an ML probe request) for a Per-STA profile subelement corresponding to the non-primary link from AP1 or AP2 (which responds with an ML probe response).

In a third example scenario, an NSTR AP MLD (e.g., MLD 120) may establish or otherwise set up two links which constitute an NSTR link pair. For instance, a first link or link1 (L1), as a primary link, may be on a 5GHz band and a second link or link2 (L2), as a non-primary link, may be on 6GHz band. Moreover, another single-link AP (AP3) may set up an BSS on the same channel as L1. In this example, AP3 may transmit one or more Beacon frames on L1 without carrying an ML element. Also, AP3 may include an RNR element in the one or more Beacon frames to advertise on L1 regarding AP1 on L1, which is a primary link of an NSTR link pair, and AP2 on L2, which is a non-primary Link of an NSTR link pair.

Correspondingly, in case that a non-AP STA affiliated with a non-AP MLD (e.g., MLD 110) receives a Beacon frame from AP3 on L1, the non-AP STA may identify, by the RNR element in the Beacon frame from AP3, a neighbor AP on L1 which is operating on a primary link and that another or same neighbor AP on L2 which is operating on a non-primary link. In case that the non-AP MLD intends to associate with the AP MLD identified through the RNR element, the non-AP MLD may send an ML probe request to AP 1 on L1 to request for a Per-STA Profile subelement corresponding to the identified non-primary link. The non-AP MLD may also determine the NSTR link pair by obtaining the NSTR Indication Bitmap in the Per-STA Profile subelement from an ML probe response from AP1.

### Illustrative Implementations

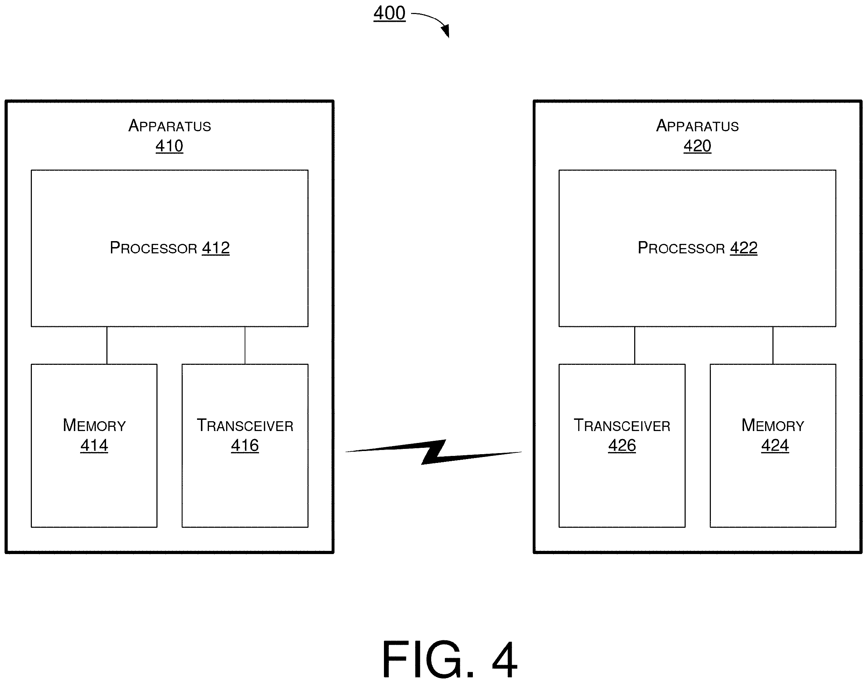

FIG. 4 illustrates an example system 400 having at least an example apparatus 410 and an example apparatus 420 in accordance with an implementation of the present disclosure. Each of apparatus 410 and apparatus 420 may perform various functions to implement schemes, techniques, processes and methods described herein pertaining to primary link identification schemes in wireless communications, including the various schemes described above with respect to various proposed designs, concepts, schemes, systems and methods described above as well as processes described below. For instance, apparatus 410 may be implemented in STA 110 and apparatus 420 may be implemented in STA 120, or vice versa.

Each of apparatus 410 and apparatus 420 may be a part of an electronic apparatus, which may be a non-AP MLD or an AP MLD, such as a portable or mobile apparatus, a wearable apparatus, a wireless communication apparatus or a computing apparatus. When implemented in a non-AP MLD, each of apparatus 410 and apparatus 420 may be implemented in a smartphone, a smart watch, a personal digital assistant, a digital camera, or a computing equipment such as a tablet computer, a laptop computer or a notebook computer. Each of apparatus 410 and apparatus 420 may also be a part of a machine type apparatus, which may be an IoT apparatus such as an immobile or a stationary apparatus, a home apparatus, a wire communication apparatus or a computing apparatus. For instance, each of apparatus 410 and apparatus 420 may be implemented in a smart thermostat, a smart fridge, a smart door lock, a wireless speaker or a home control center. When implemented in or as a network apparatus, apparatus 410 and/or apparatus 420 may be implemented in a network node, such as an AP MLD in a WLAN.

In some implementations, each of apparatus 410 and apparatus 420 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 410 and apparatus 420 may be implemented in or as a non-AP MLD or an AP MLD. Each of apparatus 410 and apparatus 420 may include at least some of those components shown in FIG. 4 such as a processor 412 and a processor 422, respectively, for example. Each of apparatus 410 and apparatus 420 may further include one or more other components not pertinent to the proposed scheme of the present disclosure (e.g., internal power supply, display device and/or user interface device), and, thus, such component(s) of apparatus 410 and apparatus 420 are neither shown in FIG. 4 nor described below in the interest of simplicity and brevity.

In one aspect, processor 412 and processor 422 may be implemented in the form of one or more single-core processors, one or more multi-core processors, one or more RISC processors or one or more CISC processors. That is, even though a singular term "a processor" is used herein to refer to processor 412 and processor 422, processor 412 and processor 422 may include multiple processors in some implementations and a single processor in other implementations in accordance with the present disclosure. In another aspect, processor 412 and processor 422 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, processor 412 and processor 422 is a special-purpose machine specifically designed, arranged and configured to perform specific tasks including those pertaining to primary link identification schemes in wireless communications in accordance with various implementations of the present disclosure.

In some implementations, apparatus 410 may also include a transceiver 416 coupled to processor 412. Transceiver 416 may include a transmitter capable of wirelessly transmitting and a receiver capable of wirelessly receiving data. In some implementations, apparatus 420 may also include a transceiver 426 coupled to processor 422. Transceiver 426 may include a transmitter capable of wirelessly transmitting and a receiver capable of wirelessly receiving data.

In some implementations, apparatus 410 may further include a memory 414 coupled to processor 412 and capable of being accessed by processor 412 and storing data therein. In some implementations, apparatus 420 may further include a memory 424 coupled to processor 422 and capable of being accessed by processor 422 and storing data therein. Each of memory 414 and memory 424 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 414 and memory 424 may include a type of read-only memory (ROM) such as mask ROM, programmable ROM (PROM), erasable programmable ROM (EPROM) and/or electrically erasable programmable ROM (EEPROM). Alternatively, or additionally, each of memory 414 and memory 424 may include a type of non-volatile random-access memory (NVRAM) such as flash memory, solid-state memory, ferroelectric RAM (FeRAM), magnetoresistive RAM (MRAM) and/or phase-change memory.

Each of apparatus 410 and apparatus 420 may be a communication entity capable of communicating with each other using various proposed schemes in accordance with the present disclosure. For illustrative purposes and without limitation, a description of capabilities of apparatus 410, as MLD 110 (e.g., a non-AP MLD operating on a NSTR link pair), and apparatus 420, as MLD 120 (e.g., an AP MLD), is provided below in the context of example processes 500 and 600. It is noteworthy that, although the example implementations described below are provided in the context of WLAN, the same may be implemented in other types of networks. It is also noteworthy that, although examples described below are provide in the context of apparatus 410, the examples may also be applicable to apparatus 420 or otherwise implemented by apparatus 420.

### Illustrative Processes

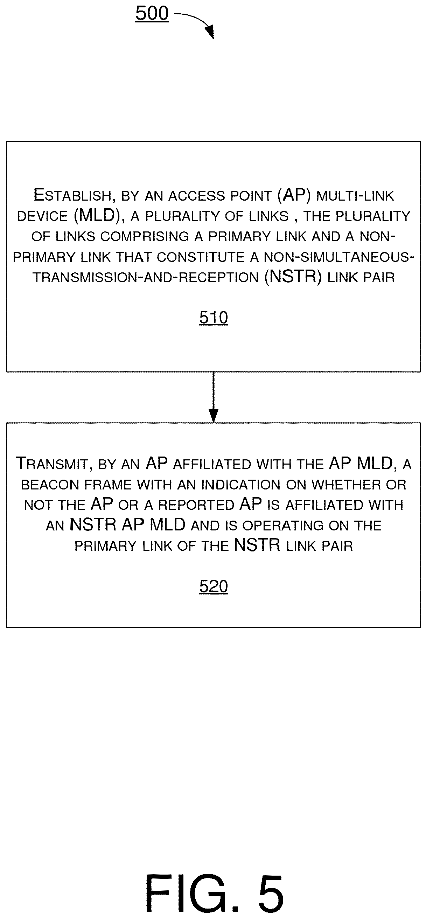

FIG. 5 illustrates an example process 500 in accordance with an implementation of the present disclosure. Process 500 may represent an aspect of implementing various proposed designs, concepts, schemes, systems and methods described above. More specifically, process 500 may represent an aspect of the proposed concepts and schemes pertaining to primary link identification schemes in wireless communications in accordance with the present disclosure. Process 500 may include one or more operations, actions, or functions as illustrated by one or more of blocks 510 and 520. Although illustrated as discrete blocks, various blocks of process 500 may be divided into additional blocks, combined into fewer blocks, or eliminated, depending on the desired implementation. Moreover, the blocks/sub-blocks of process 500 may be executed in the order shown in FIG. 5 or, alternatively, in a different order. Furthermore, one or more of the blocks/sub-blocks of process 500 may be executed repeatedly or iteratively. Process 500 may be implemented by or in apparatus 410 and apparatus 420 as well as any variations thereof. Solely for illustrative purposes and without limiting the scope, process 500 is described below in the context of apparatus 410 implemented in or as MLD 110 and apparatus 420 implemented in or as MLD 120 of a wireless network such as a WLAN in network environment 100 in accordance with one or more of IEEE 802.11 standards. It is noteworthy that, although examples described below are provide in the context of apparatus 410 implementing a STA affiliated with an NSTR non-AP MLD (e.g., MLD 110) and apparatus 420 implementing an AP affiliated with an NSTR AP MLD (e.g., MLD 120). It is noteworthy that process 500 may also be implemented in the context of apparatus 410 implementing a non-AP STA affiliated with a non-AP MLD (e.g., MLD 110) and apparatus 420 implementing an AP affiliated with an NSTR AP MLD (e.g., MLD 120). Process 500 may begin at block 510.

At 510, process 500 may involve processor 422, as an AP MLD (e.g., MLD 120), establishing, via transceiver 426, a plurality of links (e.g., with a non-AP MLD (e.g., apparatus 410 as MLD 110)). The plurality of links may include a primary link and a non-primary link that constitute an NSTR link pair. Process 500 may proceed from 510 to 520.

At 520, process 500 may involve processor 422 transmitting, as an AP affiliated with the AP MLD (e.g., AP1) via transceiver 426, a beacon frame with an indication on whether or not the AP or a reported AP (e.g., AP2 or AP3) is affiliated with an NSTR AP MLD and is operating on the primary link of the NSTR link pair.

In some implementations, the beacon frame may indicate whether or not the AP is affiliated with an NSTR AP MLD and is operating on the primary link of the NSTR link pair. Moreover, the indication may include at least one of the following: (1) an AP MLD Type Indication subfield in a Common Info field of an ML element carried in the beacon frame indicating that the AP is affiliated with an NSTR AP MLD; and (2) a Primary Link Indication subfield in the Common Info field indicating whether or not the AP is operating on the primary link.

In some implementations, the plurality of links may include a first link and a second link. In such cases, in establishing the plurality of links, process 500 may involve processor 422 establishing the first link as the primary link on a first frequency band and the second link as the non-primary link on a second frequency band different than the first frequency band. Moreover, the beacon frame may be transmitted on the first link.

In some implementations, the beacon frame may indicate whether or not the reported AP that is affiliated with an NSTR AP MLD is operating on the primary link of the NSTR link pair. Moreover, the indication may include a Primary Link Indication in an MLD Parameters subfield in a TBTT Information field of a Neighbor AP Information field in an RNR element carried in the beacon frame indicating whether or not the reported AP that is affiliated with an NSTR AP MLD is operating on the primary link. For instance, an AP MLD Type Indication subfield in a Common Info field of an ML element carried in the beacon frame may be set to a first value (e.g., 1) to indicate that the AP is affiliated with an NSTR AP MLD.

In some implementations, the plurality of links may include a first link, a second link and a third link. In such cases, in establishing the plurality of links, process 500 may involve processor 422 establishing the first link on a first frequency band, the second link as the primary link on a second frequency band different than the first frequency band, and the third link as the non-primary link on a third frequency band different than the first and second frequency bands. Moreover, the beacon frame may be transmitted on the first link.

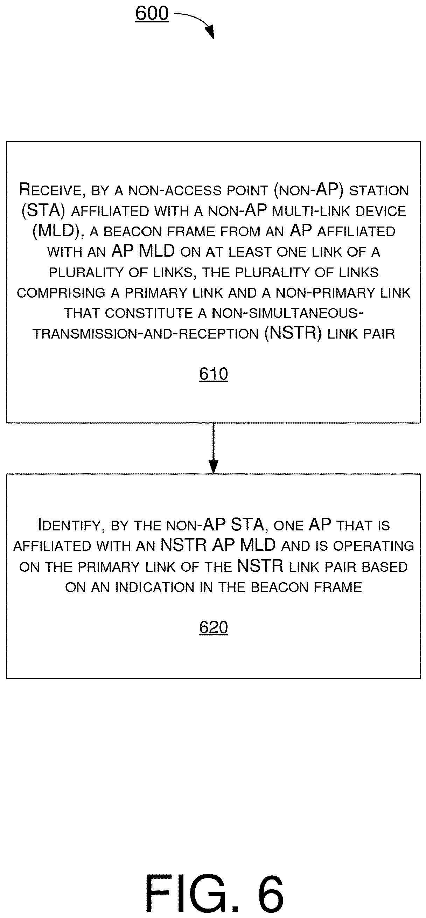

FIG. 6 illustrates an example process 600 in accordance with an implementation of the present disclosure. Process 600 may represent an aspect of implementing various proposed designs, concepts, schemes, systems and methods described above. More specifically, process 600 may represent an aspect of the proposed concepts and schemes pertaining to primary link identification schemes in wireless communications in accordance with the present disclosure. Process 600 may include one or more operations, actions, or functions as illustrated by one or more of blocks 610 and 620. Although illustrated as discrete blocks, various blocks of process 600 may be divided into additional blocks, combined into fewer blocks, or eliminated, depending on the desired implementation. Moreover, the blocks/sub-blocks of process 600 may be executed in the order shown in FIG. 6 or, alternatively, in a different order. Furthermore, one or more of the blocks/sub-blocks of process 600 may be executed repeatedly or iteratively. Process 600 may be implemented by or in apparatus 410 and apparatus 420 as well as any variations thereof. Solely for illustrative purposes and without limiting the scope, process 600 is described below in the context of apparatus 410 implemented in or as MLD 110 and apparatus 420 implemented in or as MLD 120 of a wireless network such as a WLAN in network environment 100 in accordance with one or more of IEEE 802.11 standards. It is noteworthy that, although examples described below are provide in the context of apparatus 410 implementing a STA affiliated with an NSTR non-AP MLD (e.g., MLD 110) and apparatus 420 implementing an AP affiliated with an NSTR AP MLD (e.g., MLD 120). It is noteworthy that process 600 may also be implemented in the context of apparatus 410 implementing a non-AP STA affiliated with a non-AP MLD (e.g., MLD 110) and apparatus 420 implementing an AP affiliated with an NSTR AP MLD (e.g., MLD 120). Process 600 may begin at block 610.

At 610, process 600 may involve processor 412, as a non-AP STA (e.g., STA1), receiving, via transceiver 416, a beacon frame from an AP (e.g., AP1) affiliated with an AP MLD (e.g., apparatus 420 as MLD 120) on at least one link of a plurality of links. The plurality of links may include a primary link and a non-primary link that constitute an NSTR link pair. Process 600 may proceed from 610 to 620.

At 620, process 600 may involve processor 422 identifying one AP that is affiliated with an NSTR AP MLD and is operating on the primary link of the NSTR link pair based on an indication in the beacon frame.

In some implementations, the indication may include at least one of the following: (1) an AP MLD Type Indication subfield in a Common Info field of an ML element carried in the beacon frame indicating that the AP is affiliated with an NSTR AP MLD; and (2) a Primary Link Indication subfield in the Common Info field indicating whether or not the AP is operating on the primary link. In some implementations, the plurality of links may include a first link as the primary link on a first frequency band and a second link as the non-primary link on a second frequency band different than the first frequency band. Moreover, the beacon frame may be received on the first link.

In some implementations, the indication may include a Primary Link Indication in an MLD Parameters subfield in a TBTT Information field of a Neighbor AP Information field in an RNR element carried in the beacon frame indicating whether or not the reported AP is affiliated with the NSTR AP MLD and is operating on the primary link. In some implementations, an AP MLD Type Indication subfield in a Common Info field of an ML element carried in the beacon frame may be set to a first value (e.g., 1) to indicate that the AP is affiliated with an NSTR AP MLD. In some implementations, the plurality of links may include a first link on a first frequency band, a second link as the primary link on a second frequency band different than the first frequency band, and a third link as the non-primary link on a third frequency band different than the first and second frequency bands. Moreover, the beacon frame may be received on the first link.

In some implementations, in identifying the one of the plurality of links as the primary link of the NSTR link pair, process 600 may involve processor 422 performing certain operations. For instance, process 600 may involve processor 422 identifying the non-primary link of the NSTR link pair based on an RNR element carried in the beacon frame. Additionally, process 600 may involve processor 422 transmitting an ML probe request to the AP. Moreover, process 600 may involve processor 422 receiving an ML probe response from the AP. Furthermore, process 600 may involve processor 422 determining the primary link of the NSTR link pair by decoding an NSTR Indication Bitmap in a Per-STA Profile subelement corresponding to the non-primary link in an ML element in the ML probe response. For instance, a first value (e.g., 1) of a bit in the NSTR Indication Bitmap may indicate a link ID of the primary link.

In some implementations, process 600 may involve processor 422 performing additional operations. For instance, process 600 may involve processor 422 determining the NSTR link pair corresponding to the identified primary link by one or more of the following: (1) the non-primary link identified in a TBTT Information field of a Neighbor AP Information field in an RNR element carried in the beacon frame corresponding to a reported AP in an event that there is only one AP affiliated with an NSTR AP MLD that is operating on the non-primary link of an NSTR link pair; (2) an NSTR Indication Bitmap in a Per-STA Profile subelement corresponding to the primary link in an ML element in the beacon frame received from the AP affiliated with the NSTR AP MLD; and (3) the NSTR Indication Bitmap in the Per-STA Profile subelement corresponding to the non-primary link in the ML element.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure being indicated by the following claims.

## Claims

1. A method, comprising:
establishing, by an access point (AP) multi-link device (MLD), a plurality of links, the plurality of links comprising a primary link and a non-primary link that constitute a non-simultaneous-transmission-and-reception (NSTR) link pair; and
transmitting, by an AP affiliated with the AP MLD, a beacon frame with an indication on whether or not the AP or a reported AP is affiliated with an NSTR AP MLD and is operating on the primary link of the NSTR link pair.

2. The method of Claim 1, wherein the beacon frame indicates whether or not the AP is affiliated with an NSTR AP MLD and is operating on the primary link of the NSTR link pair, and wherein the indication comprises at least one of:
an AP MLD Type Indication subfield in a Common Info field of a Multi-Link (ML) element carried in the beacon frame indicating that the AP is affiliated with an NSTR AP MLD; and
a Primary Link Indication subfield in the Common Info field indicating whether or not the AP is operating on the primary link.

3. The method of Claim 1, wherein the beacon frame indicates whether or not the reported AP is affiliated with an NSTR AP MLD and is operating on the primary link of the NSTR link pair, and wherein the indication comprises a Primary Link Indication in an MLD Parameters subfield in a Target Beacon Transmission Time (TBTT) Information field of a Neighbor AP Information field in a Reduced Neighbor Report (RNR) element carried in the beacon frame indicating whether or not the reported AP is affiliated with an NSTR AP MLD and is operating on the primary link.

4. A method, comprising:
receiving, by a non-access point (non-AP) station (STA) affiliated with a non-AP multi-link device (MLD), a beacon frame from an AP affiliated with an AP MLD on at least one link of a plurality of links, the plurality of links comprising a primary link and a non-primary link that constitute a non-simultaneous-transmission-and-reception (NSTR) link pair; and
identifying, by the non-AP STA, one AP that is affiliated with an NSTR AP MLD and is operating on the primary link of the NSTR link pair based on an indication in the beacon frame.

5. The method of Claim 4, wherein the indication comprises at least one of:
an AP MLD Type Indication subfield in a Common Info field of a Multi-Link (ML) element carried in the beacon frame indicating that the AP is affiliated with an NSTR AP MLD; and
a Primary Link Indication subfield in the Common Info field indicating whether or not the AP is operating on the primary link.

6. The method of Claim 5, wherein the plurality of links comprise a first link as the primary link on a first frequency band and a second link as the non-primary link on a second frequency band different than the first frequency band, and wherein the beacon frame is received on the first link.

7. The method of Claim 4, wherein the indication comprises a Primary Link Indication in an MLD Parameters subfield in a Target Beacon Transmission Time (TBTT) Information field of a Neighbor AP Information field in a Reduced Neighbor Report (RNR) element carried in the beacon frame indicating whether or not the reported AP is affiliated with the NSTR AP MLD and is operating on the primary link.

8. The method of Claim 7, wherein the plurality of links comprise a first link on a first frequency band, a second link as the primary link on a second frequency band different than the first frequency band, and a third link as the non-primary link on a third frequency band different than the first and second frequency bands, and wherein the beacon frame is received on the first link.

9. The method of Claim 4, wherein the identifying of the one of the plurality of links as the primary link of the NSTR link pair comprises:
identifying the non-primary link of the NSTR link pair based on a Reduced Neighbor Report (RNR) element carried in the beacon frame;
transmitting a Multi-Link (ML) probe request to the AP;
receiving an ML probe response from the AP;
determining the primary link of the NSTR link pair by decoding an NSTR Indication Bitmap in a Per-STA Profile subelement corresponding to the non-primary link in an ML element in the ML probe response,
wherein a first value of a bit in the NSTR Indication Bitmap indicates a link identification (ID) of the primary link.

10. The method of Claim 4, further comprising:
determining, by the non-AP STA, the NSTR link pair corresponding to the identified primary link by one or more of:
the non-primary link identified in a Target Beacon Transmission Time (TBTT) Information field of a Neighbor AP Information field in a Reduced Neighbor Report (RNR) element carried in the beacon frame corresponding to a reported AP in an event that there is only one AP affiliated with an NSTR AP MLD that is operating on the non-primary link of an NSTR link pair;
an NSTR Indication Bitmap in a Per-STA Profile subelement corresponding to the primary link in a Multi-Link (ML) element in the beacon frame received from the AP affiliated with the NSTR AP MLD; and
the NSTR Indication Bitmap in the Per-STA Profile subelement corresponding to the non-primary link in the ML element.

11. An apparatus implementable in an access point (AP) multi-link device (MLD), comprising:
a transceiver configured to communicate wirelessly; and
a processor coupled to the transceiver and configured to perform, as an AP affiliated with the AP MLD, operations comprising:
establishing, via the transceiver, a plurality of links with a non-AP MLD, the plurality of links comprising a primary link and a non-primary link that constitute a non-simultaneous-transmission-and-reception (NSTR) link pair; and
transmitting, via the transceiver, a beacon frame with an indication on whether or not the AP or a reported AP is affiliated with an NSTR AP MLD and is operating on the primary link of the NSTR link pair.

12. The apparatus of Claim 11, wherein the beacon frame indicates whether or not the AP is operating on the primary link of the NSTR link pair, and wherein the indication comprises at least one of:
an AP MLD Type Indication subfield in a Common Info field of a Multi-Link (ML) element carried in the beacon frame indicating that the AP is affiliated with an NSTR AP MLD; and
a Primary Link Indication subfield in the Common Info field indicating whether or not the AP is operating on the primary link.

13. The method of Claim 2 or the apparatus of Claim 12, wherein the plurality of links comprise a first link and a second link, wherein the establishing of the plurality of links comprises establishing the first link as the primary link on a first frequency band and the second link as the non-primary link on a second frequency band different than the first frequency band, and wherein the beacon frame is transmitted on the first link.

14. The method of Claim 3 or 7 or the apparatus of Claim 12, wherein an AP MLD Type Indication subfield in a Common Info field of a Multi-Link (ML) element carried in the beacon frame is set to a first value to indicate that the AP is affiliated with an NSTR AP MLD.

15. The method of Claim 3 or the apparatus of Claim 12, wherein the plurality of links comprise a first link, a second link and a third link, wherein the establishing of the plurality of links comprises establishing the first link on a first frequency band, the second link as the primary link on a second frequency band different than the first frequency band, and the third link as the non-primary link on a third frequency band different than the first and second frequency bands, and wherein the beacon frame is transmitted on the first link.
